# EUROPEAN PATENT APPLICATION

(11) **EP 2 372 926 A1**
(43) Date of publication of application: **05.10.2011**
(21) Application number: 08878396.4
(22) Date of filing: 26.11.2008
(51) Int. Cl.: H04B 7/08, H04B 1/16

(54) **RECEIVING DEVICE, RECEPTION PROCESSING METHOD, RECEPTION PROCESSING PROGRAM, AND RECORDING MEDIUM**

(71) Applicant: Pioneer Corporation, Kanagawa 212-0031 (JP)
(72) Inventor: KANNO, Hideyuki, Kawagoe-shi Saitama 350-8555 (JP)
(74) Representative: Haley, Stephen
(86) International application number: PCT/JP2008/071450
(87) International publication number: WO 2010/061439

(57) **Abstract**

When the reception quality of a broadcast wave from a reproduction target station is lower than a predetermined reception quality, a control unit controls a filtering processing part to perform a synthetic reproduction mode operation in which a reproduction output is carried out based on the reception result of the broadcast wave received from the reception target station by a main antenna and a sub-antenna. During the synthetic reproduction mode operation, the control unit specifies a mute process to a mute processing part at regular intervals over a predetermined time period, and then specifies, according to a frequency list stored inside the control unit, mutually different replacement candidate stations as channel selections specified in a main tuner and a sub-tuner. Consequently, the reception qualities of broadcast waves from the two replacement candidate stations are detected in parallel. Accordingly, while suppressing the occurrence of sense of discomfort felt by the user, the reproduction operation of a program broadcast from the reproduction target station and a seek operation for seeking an appropriate replacement candidate station can be performed at a time.

## Description

### TECHNICAL FIELD

The present invention relates to a reception device, to a reception processing method and a reception processing program, and to a recording medium upon which the reception processing program is recorded.

### BACKGROUND ART

From the past, reception devices that receive and reproduce FM (Frequency Modulated) radio broadcasts have often been mounted to moving bodies such as vehicles and so on. Among such reception devices, there are some in which two (antenna + tuner) structures are employed, thus being provided with two antennas and with a tuner corresponding to each one of those two antennas.

Such a two (antenna + tuner) structure is employed with the objective of selection of a broadcasting station that is performing broadcasting on an optimum physical channel, by a network follow function that employs diversity reception processing, or the RDS (Radio Data System) format that is widespread in, for example, Europe. Here, the RDS format is a format in which various types of digital data are multiplexed and transmitted upon an FM broadcast signal. And, in this data that is multiplexed, there is included program identification code (PI) data for the broadcast that is being currently received, a data list (AF) of the frequencies of alternative candidate stations, and so on.

A reception device of this type of two-tuner structure that performs broadcasting station seeking using diversity reception processing and AF data has been proposed (refer to Patent Document #1: hereinafter termed the "prior art example"). With the technique of this prior art example, if the received quality of a broadcast wave from a target station for reproduction with a main antenna which is one of the two antennas is satisfactory, then, along with performing reception with the main antenna and performing reproduction of the program broadcast from the target station for reproduction only on the basis of the broadcast signal from that target station for reproduction that has been extracted by a tuner (hereinafter termed the "main tuner") corresponding to that main antenna, also it is arranged to perform seek processing for an alternative candidate station by using a sub-antenna which is the other one of the two antennas, and a tuner that corresponds to that sub-antenna (hereinafter termed the "sub-tuner").

Moreover, with the technique of this prior art example, if the quality of the broadcast wave received from the target station for reproduction with the main antenna cannot be said to be satisfactory, then reproduction of the program that is broadcast from the target station for reproduction is performed on the basis of the result of phase diversity combining of the broadcast signal from that target station for reproduction that has been received by the main antenna and extracted by the main tuner, and of the broadcast signal from that target station for reproduction that has been received by the sub-antenna and extracted by the sub-tuner. And periodically the phase diversity combining settings are cancelled, and, while performing the reproduction of the program broadcast from the target station for reproduction on the basis only of the broadcast signal from that target station for reproduction that has been received by the main antenna and extracted by the main tuner, it is arranged to perform seek processing for an alternative candidate station using the sub-antenna and the sub-tuner.

Patent Document #1: Japanese Laid-Open Patent Publication 2007-60624.

### DISCLOSURE OF THE INVENTION

### PROBLEMS TO BE SOLVED BY THE INVENTION

Now, sometimes it is the case that the so called multiple path phenomenon occurs, due to the presence of surrounding buildings and so on. Due to this, it is necessary to perform filtering control in the reception device in order to eliminate these multiple paths. During phase diversity combining processing, this filtering control for eliminating multiple paths is performed on the basis of the result of combination of the outputs from the two tuners. On the other hand, during frequency diversity processing in which reproduction of the program broadcast from the target station for reproduction is performed only on the basis of the signal broadcast from that target station for reproduction that has been extracted by the main tuner, filtering control for multiple path elimination is performed only on the basis of the output of the main tuner. Generally, adaptive filter control is employed for this type of filtering control.

In this type of filtering control for multiple path elimination, a certain period of time is required for changing over between phase diversity combining processing and frequency diversity processing, and until the tracking for the diversity changeover becomes adequate. As a result, with the technique of the prior art example, sound that is equivalent to noise comes to be outputted during the changeover of diversity processing, and this entails a strong feeling of discomfort for the user, which is undesirable.

Due to this a technique is desired that, while reducing the generation of feelings of discomfort to the user, is capable of rendering compatible operation to reproduce a program that is broadcast from a target station for reproduction, and operation to seek an appropriate alternative candidate station. To respond to this requirement is considered as being one problem that the present invention must solve.

The present invention has been conceived in consideration of the circumstances described above, and takes as its objective to provide a reception device and a reception processing method that, while preventing any feeling of discomfort being imparted to the user, are also capable of rendering mutually compatible reproduction of a desired program, and appropriately changing over to an optimum alternative station.

### MEANS FOR SOLVING THE PROBLEMS

Considered from a first standpoint, the present invention is a reception device that receives and reproduces a broadcast signal from a target station for reproduction, characterized by comprising: a first antenna means and a second antenna means; a first frequency conversion means that converts a signal on a first broadcast wave frequency band from a first selected station received by said first antenna means, to a first signal on a predetermined frequency band; a second frequency conversion means that converts a signal on a second broadcast wave frequency band from a second selected station received by said second antenna means, to a second signal on said predetermined frequency band; a first detection means that detects the reception quality of said first broadcast wave; a second detection means that detects the reception quality of said second broadcast wave; a generation means that generates a signal for reproduction on the basis of at least one of said first signal and said second signal, according to a signal selection command; a processing means that, when a noise reproduction prevention command has been issued, performs noise reproduction prevention processing upon said signal for reproduction that has been generated; and a control means that stores frequency list information in which is registered frequency information for at least a signal alternative candidate station corresponding to said target station for reproduction, and that issues: commands to said first and second frequency conversion means for selection of said first and said second selected stations, said signal selection command to said generation means, and said noise reproduction prevention command to said processing means; and wherein said control means: if a phase diversity combining operation condition is satisfied that, when said target station for reproduction is designated as said first selected station, the result of detection by said first detection means is lower than a predetermined reception quality: designates said second selected station as said target station for reproduction, and issues commands for said first signal and said second signal to be selected as said signal selection commands; if said phase diversity combining operation condition is satisfied, and moreover there are a plurality of said alternative candidate stations: periodically over a predetermined time period, issues said noise reproduction prevention command, and, as designation of said first and said second selected stations, according to said frequency list information, designates mutually different broadcasting stations among said alternative candidate stations, and gathers the results of detection by said first and said second detection means; and, on the basis of the results of detection by said first and said second detection means within said predetermined time period, and the result of detection of the reception quality of the broadcast wave from said target station for reproduction by said first detection means outside said predetermined time period: makes a changeover possibility decision as to whether or not there exists an alternative candidate station for which there is an adequate possibility that it can be made a new target station for reproduction.

Moreover, considered from a second standpoint, the present invention is a reception processing method that is used by a reception device that comprises a first frequency conversion means that converts a signal on a first broadcast wave frequency band from a first selected station received by a first antenna means to a first signal on a predetermined frequency band; a second frequency conversion means that converts a signal on a second broadcast wave frequency band from a second selected station received by a second antenna means to a second signal on said predetermined frequency band; a first detection means that detects the reception quality of said first broadcast wave; and a second detection means that detects the reception quality of said second broadcast wave, and wherein frequency list information in which is registered frequency information for at least a signal alternative candidate station corresponding to a target station for reproduction is stored internally, comprising: a combining process of, if a phase diversity combining operation condition is satisfied that, when said target station for reproduction is designated as said first selected station, the result of detection by said first detection means is lower than a predetermined reception quality: designating said second selected station as said target station for reproduction, and performing phase diversity combination on the basis of said first signal and said second signal; a gathering process of, if said phase diversity combining operation condition is satisfied, and moreover there are a plurality of said alternative candidate stations: during the execution of said combining process, while periodically over a predetermined time period issuing said noise reproduction prevention command, as designation of said first and said second selected stations, according to said frequency list information, designating mutually different broadcasting stations among said alternative candidate stations, and gathering the results of detection by said first and said second detection means; and a decision process of, on the basis of the results of detection by said first and said second detection means within said predetermined time period, and the result of detection of the reception quality of the broadcast wave from said target station for reproduction by said first detection means outside said predetermined time period: making a decision as to whether or not there exists an alternative candidate station for which there is an adequate possibility that it can be made a new target station for reproduction.

Furthermore, considered from a third standpoint, the present invention is a reception processing program, characterized in that a reception processing method according to the present invention is executed by a calculation means.

And, considered from a fourth standpoint, the present invention is a recording medium, characterized in that a reception processing program according to the present invention that can be read in by a calculation means is recorded thereupon.

### BRIEF DESCRIPTION OF THE DRAWINGS

Fig. 1 is a block diagram schematically showing the structure of a reception device according to an embodiment of the present invention;
Fig. 2 is a block diagram showing the structure of a tuner unit of Fig. 1;
Fig. 3 is a block diagram showing the structure of a reproduction processing unit of Fig. 1;
Fig. 4 is a block diagram showing the structure of a filtering processing part of Fig. 3;
Fig. 5 is a block diagram showing the structure of an RDS signal processing part of Fig. 3;
Fig. 6 is a figure for explanation of the contents of a frequency list of Fig. 1;
Fig. 7 is a figure for explanation of types of reproduction mode for the device of Fig. 1;
Fig. 8 is a flow chart for explanation of a reproduction control procedure by the device of Fig. 1;
Fig. 9 is a flow chart for explanation of seek processing in a step S16 of Fig. 8;
Fig. 10 is a flow chart for explanation of seek processing in a step S20 of Fig. 8; and
Fig. 11 is a flow chart for explanation of changeover related processing in a step S22 of Fig. 8.

### BEST MODE FOR CARRYING OUT THE INVENTION

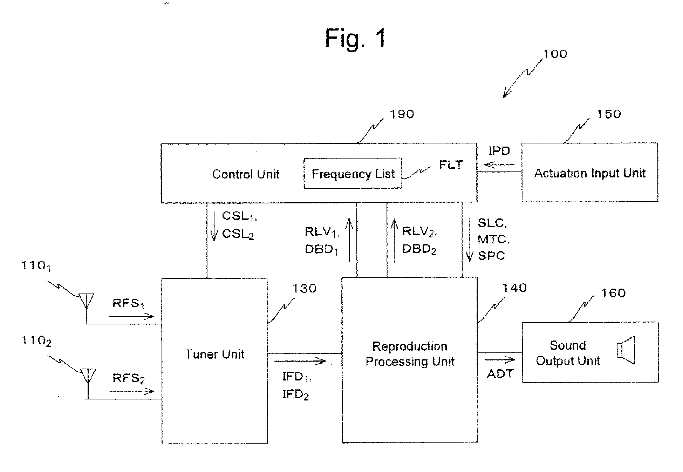

An embodiment of the present invention will now be explained in the following with reference to Figs. 1 through 11. It should be understood that, in this embodiment, an example is shown and explained of a FM radio reception device compatible with the RDS format that is mounted in a vehicle. Moreover, in the following explanation and drawings, to elements that are the same or equivalent, the same reference symbols are appended, and duplicated explanation is omitted.

### [Structure]

In Fig. 1, the schematic structure of a reception device 100 according to an embodiment is shown as a block diagram. As shown in this Fig. 1, the reception device 100 comprises a main antenna 110₁ that serves as a first antenna means and a sub-antenna 110₂ that serves as a second antenna means. Moreover, this reception device 100 comprises a tuner unit 130 and a reproduction processing unit 140. Furthermore, the reception device 100 comprises an actuation input unit 150, a sound output unit 160, and a control unit 190 that serves as a control means.

The result of reception by the main antenna 110₁ described above is outputted to the tuner unit 130 as a signal RFS₁. Moreover, the result of reception by the sub-antenna 110₂ described above is outputted to the tuner unit 130 as a signal RFS₂.

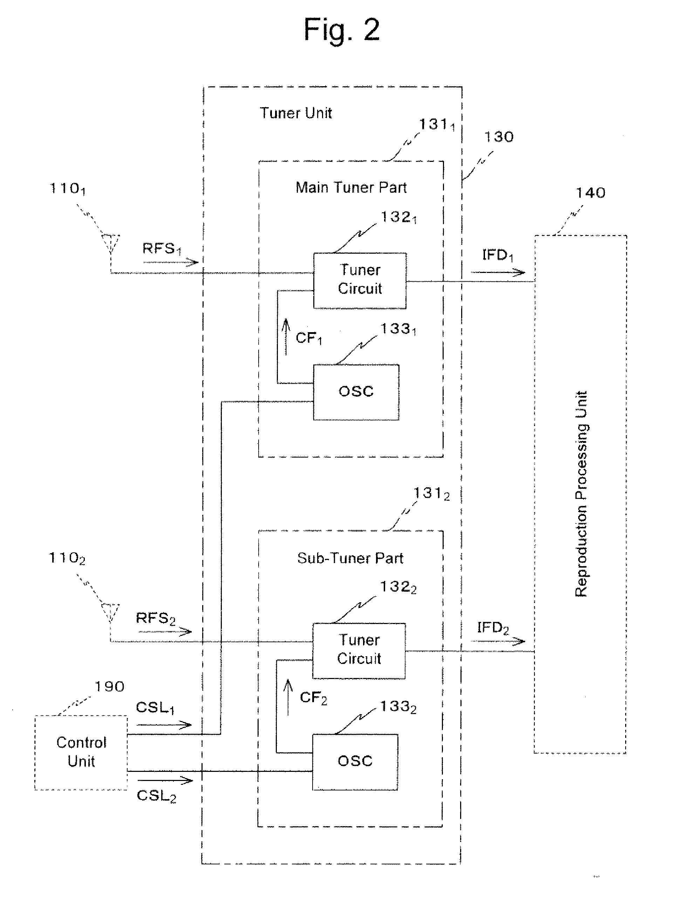

According to tuning commands CSL₁ and CSL₂ from the control unit 190, the tuner unit 130 described above extracts signals on a physical channel to be selected from the signals RFS₁ and RFS₂ and performs tuning processing, and outputs signals IFD₁ and IFD₂ having a predetermined intermediate frequency to the reproduction processing unit 140. As shown in Fig. 2, this tuner unit 130 comprises a main tuner part 131₁ that serves as a first frequency conversion means and a sub-tuner part 131₂ that serves as a second frequency conversion means.

The main tuner part 131₁ described above performs tuning processing upon the signal RFS₁ from the main antenna 110₁. This main tuner part 131₁ comprises a tuner circuit 132₁ and a local oscillation circuit (OSC) 133₁.

And, according to the oscillation signal CF₁ from the local oscillation circuit 133₁, the tuner circuit 132₁ described above extracts a signal from the broadcasting station that is to be tuned to from the signal RFS₁. The result of extraction by the tuner circuit 132₁ is sent to the reproduction processing unit 140 as a signal IFD₁ that has the predetermined intermediate frequency.

The local oscillation circuit 133₁ described above comprises an oscillator and so on whose frequency of oscillation can be controlled by voltage control or the like. According to a tuning command CSL₁ supplied from the control unit 190, this local oscillation circuit 133₁ generates an oscillation signal CF₁ having a frequency that corresponds to the broadcasting station that is to be tuned to by the main tuner part 131₁, and supplies this signal to the tuner circuit 132₁.

The sub-tuner part 131₂ described above performs tuning processing upon the signal RFS₂ from the sub-antenna 110₂. This sub-tuner part 131₂ comprises a tuner circuit 132₂ and a local oscillation circuit (OSC) 133₂.

And, according to the oscillation signal CF₂ from the local oscillation circuit 133₂, the tuner circuit 132₂ described above extracts a signal from the broadcasting station that is to be tuned to from the signal RFS₂. The result of extraction by the tuner circuit 132₂ is sent to the reproduction processing unit 140 as a signal IFD₂ that has the predetermined intermediate frequency.

Similarly to the local oscillation circuit 133₁ described above, the local oscillation circuit 133₂ described above comprises an oscillator and so on whose frequency of oscillation can be controlled by voltage control or the like. According to a tuning command CSL₂ supplied from the control unit 190 independently from the tuning command CSL₁ described above, this local oscillation circuit 133₂ generates an oscillation signal CF₂ having a frequency that corresponds to the broadcasting station that is to be tuned to by the sub-tuner part 131₂, and supplies this signal to the tuner circuit 132₂.

Each of the tuner circuits 132ⱼ described above (where j=1, 2) comprises an input filter, a high frequency amplifier (RF-AMP: Radio Frequency Amplifier), and a band pass filter (hereinafter also sometimes termed an "RF filter"), none of which are shown in the figures. Moreover, each of the tuner circuits 132ⱼ comprises a mixer (i.e. a mixing device), an intermediate frequency filter (hereinafter also sometimes termed an "IF filter"), and an AD (Analog to Digital) converter (ADC).

Here the signals RFSⱼ received by the tuner circuits 132ⱼ (where j=1, 2), after their low frequency components have been eliminated by input filters that are high pass filters, are amplified by high frequency amplifiers. The results of this amplification by the high frequency amplifiers are sent to the mixers, after signals in specified frequency ranges have been selected by RF filters.

The signals that have passed through the RF filters and the oscillation signals CFⱼ supplied from the local oscillation circuits 133ⱼ are mixed by the mixers. After signal components of an intermediate frequency range determined in advance have been selected by IF filters from the signals that result from mixing by the mixers, they are converted by ADCs into digital signals. The results of these conversions are outputted to the reproduction processing unit 140 as signals IFDⱼ.

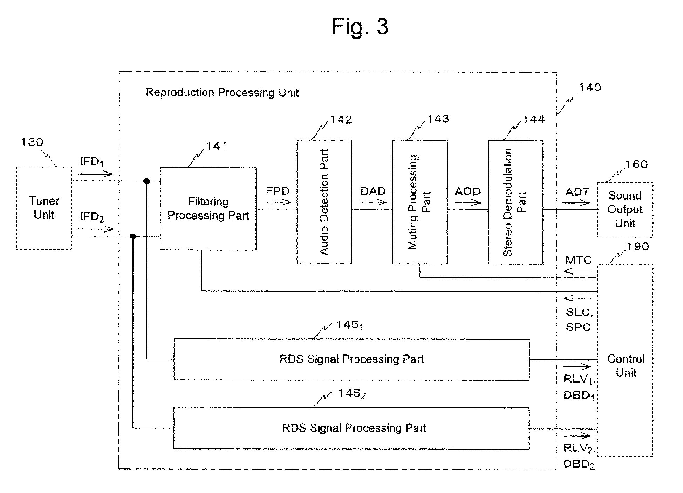

Returning to Fig. 1, based upon control by the control unit 190, the reproduction processing unit 140 processes the signals IFD₁ and IFD₂ from the tuner unit 130, and generates audio data ADT for supply to the sound output unit 160. As shown in Fig. 3, this reproduction processing unit 140 comprises a filtering processing part 141 that serves as one portion of a generation means, and an audio detection part 142 that serves as another portion of the generation means. Moreover, the reproduction processing unit 140 comprises a muting processing part 143 that serves as a processing means, and a stereo demodulation part 144. Furthermore, the reproduction processing unit 140 comprises RDS signal processing parts 145₁ and 145₂.

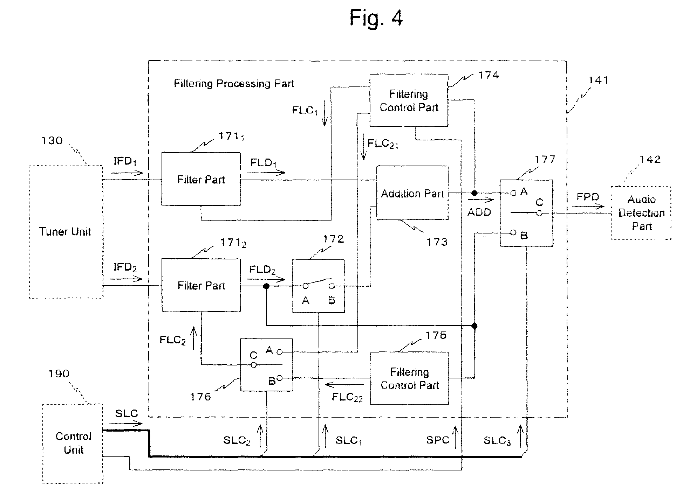

The filtering processing part 141 described above performs filtering processing in order to eliminate distortion in the received signal due to the generation of so called multiple paths. As shown in Fig. 4, the filtering processing part 141 that has this function comprises a filter part 171₁ that serves as a first filtering means and a filter part 171₂ that serves as a second filtering means. Moreover, the filtering processing part 141 comprises a switch part 172 and an addition part 173 that serves as an addition means. And the filtering processing part 141 also comprises a filtering control part 174 and a filtering control part 175 that serve as filtering control means. Yet further, the filtering processing part 141 comprises a signal selection part 176 and a signal selection part 177.

In this embodiment, the filter part 171₁ described above is constituted by a finite impulse response filter (i.e. an FIR filter). This filter part 171₁ performs digital filtering calculation upon the signal IFD₁ from the tuner unit 130 according to filter control information FLC₁, which is information about a tap coefficient designated by the filtering control part 174, and generates a signal FLD₁. This signal FLD₁ that has thus been generated is outputted to the addition part 173.

And, in this embodiment, similarly to the filter part 171₁, the filter part 171₂ described above is constituted by an FIR filter. This filter part 171₂ performs digital filtering calculation upon the signal IFD₂ from the tuner unit 130 according to filter control information FLC₂, which is information about a tap coefficient designated by the filtering control part 174 or the filtering control part 175, and generates a signal FLD₂. This signal FLD2 that has thus been generated is outputted to the switch part 172, the filtering control part 175, and the signal selection part 177.

The switch part 172 described above receives the signal FLD₂ from the filter part 171₂ at an A terminal. When set to "ON" by a switch control command SLC₁ from the control unit 190, this switch 172 goes into a state in which it is continuous between its A terminal and a B terminal. On the other hand, when set to "OFF" by the switch control command SLC₁ from the control unit 190, the switch 172 goes into a state in which it is discontinuous between its A terminal and its B terminal.

As a result, when a command is issued for the switch 172 to go to "ON", the signal FLD₂ is outputted from its B terminal to the addition part 173. On the other hand, when a command is issued for the switch 172 to go to "OFF", no signal is outputted from its B terminal to the addition part 173.

The addition part 173 described above calculates the sum of the signal FLD₁ from the filter part 171₁ and the signal supplied from the switch part 172, and generates a signal ADD. This signal ADD that has thus been generated is outputted to the filtering control part 174 and the signal selection part 177. Here, if no signal is supplied from the switch 172, the signal from the switch 172 is taken as being a "0" level signal, and the addition operation is performed on that basis.

Due to this, during the period that a command is being issued for the switch 172 to go to "ON", the signal ADD becomes the sum of the signals FLD₁ and FLD₂. On the other hand, during the period that a command is being issued for the switch 172 to go to "OFF", the signal ADD becomes just the signal FLD₁.

The filtering control part 174 described above receives the signal ADD from the addition part 173. And, on the basis of the fact that in principle the amplitude of the FM signal should be constant, according to a CMA (Constant Modulus Algorithm), the filtering control part 174 calculates filter control information FLC₁ specifying filtering operation by the filter part 171₁ and filter control information FLC₂₁ specifying filtering operation by the filter part 171₂. The filter control information FLC₁ that has thus been calculated is sent to the filter part 171₁. Moreover, the filter control information FLC₂₁ that has thus been calculated is sent to the signal selection part 176.

Furthermore, the filtering control part 174 receives an interrupt control command SPC from the control unit 190. When a command to interrupt filter control is issued as this interrupt control command SPC, the filtering control part 174 interrupts the calculation of the filter control information FLC₁ and FLC₂₁, and preserves the values of the filter control information FLC₁ and FLC₂₁ at that time point. On the other hand, when a command to cancel interruption of filter control is issued as the interrupt control command SPC, the filtering control part 174 resumes the calculation of the filter control information FLC₁ and FLC₂₁.

The filtering control part 175 described above receives the signal FLD₂ from the filter part 171₂. And, in a similar manner to the filtering control part 174 described above, on the basis of the fact that in principle the amplitude of the FM signal should be constant, and according to a CMA, the filtering control part 175 calculates filter control information FLC₂₂ specifying filtering operation by the filter part 171₂. The filter control information FLC₂₂ that has thus been calculated is sent to the signal selection part 176.

The signal selection part 176 described above, along with receiving the filter control information FLC₂₁ from the filtering control part 174 at its A terminal, also receives the filter control information FLC₂₂ from the filtering control part 175 at its B terminal. And, when a command for "select A" is issued from the control unit 190 as a signal selection command SLC₂, then a state of continuity between the A terminal and a C terminal is established. On the other hand, when a command for "select B" is issued from the control unit 190 as the signal selection command SLC₂, then a state of continuity between the B terminal and the C terminal is established.

As a result, when a command for "select A" is issued to the signal selection part 176, then the filter control information FLC₂₁ is outputted from the C terminal to the filter part 171₂ as the filter control information FLC₂. On the other hand, when a command for "select B" is issued to the signal selection part 176, then the filter control information FLC₂₂ is outputted from the C terminal to the filter part 171₂ as the filter control information FLC₂.

The signal selection part 177 described above, along with receiving the signal ADD from the addition part 173 at its A terminal, also receives the signal FLD₂ from the filter part 171₂ at its B terminal. And, when a command for "select A" is issued from the control unit 190 as a signal selection command SLC₃, then a state of continuity between the A terminal and a C terminal is established. On the other hand, when a command for "select B" is issued from the control unit 190 as a signal selection command SLC₃, then a state of continuity between the B terminal and the C terminal is established

As a result, when a command for "select A" is issued to the signal selection part 177, then the signal ADD is outputted from the C terminal to the audio detection part 142 as the signal FPD. On the other hand, when a command for "select B" is issued to the signal selection part 177, then the signal FLD₂ is outputted from the C terminal to the audio detection part 142 as the signal FPD.

It should be understood that, in Figs. 1, 3, and 4, the three control commands SLC₁ through SLC₃ are collectively described as the control command SLC.

Returning to Fig. 3, the audio detection part 142 described above performs digital wave detection processing upon the signal FPD from the filtering processing part 141 according to a predetermined format, and generates a signal DAD which is a composite signal. The signal DAD that has been generated in this manner is outputted to the muting processing part 143.

The muting processing part 143 described above receives the signal DAD from the audio detection part 142. And the muting processing part 143 performs muting processing or cancels muting processing according to a muting control command MTC from the control unit 190. In other words, when a command for muting processing is issued as the muting control command MTC, then the muting processing part 143 outputs a no-sound signal to the stereo demodulation part 144 as a signal AOD. On the other hand, when a command for muting cancellation is issued as the muting control command MTC, then the muting processing part 143 outputs the signal DAD to the stereo demodulation part 144 as the signal AOD.

The stereo demodulation part 144 described above performs stereo demodulation processing upon the signal AOD from the muting processing part 143, and generates audio data ADT. This audio data ADT that has thus been generated is outputted to the sound output unit 160.

It should be understood that, if the signal AOD is the signal DAD, then reproduction output of the broadcast program emitted from the target station for reproduction is performed by the sound output unit 160. On the other hand, if the signal AOD is a no-sound signal, then no reproduction output of any sound is performed by the sound output unit 160.

The RDS signal processing part 145₁ described above receives the signal IFD₁ from the tuner unit 130. And the RDS signal processing part 145₁ detects the reception quality of the broadcast wave from the broadcasting station that is tuned by the above described main tuner part 131₁ in the tuner unit 130, and performs processing of various types upon the data signal that is being used by RDS.

Moreover, the RDS signal processing part 145₂ described above receives the signal IFD₂ from the tuner unit 130. And the RDS signal processing part 145₂ detects the reception quality of the broadcast wave from the broadcasting station that is tuned by the above described sub-tuner part 131₂ in the tuner unit 130, and performs processing of various types upon the data signal that is being used by RDS.

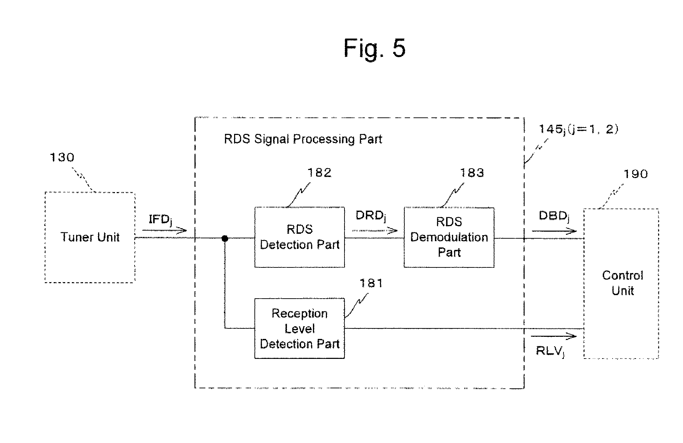

As shown in Fig. 5, each of the RDS signal processing parts having the function described above (where j=1, 2) comprises a reception level detection part 181 that serves as a j-th detection means. Moreover, each of the RDS signal processing parts 145ⱼ comprises a RDS detection part 182 and a RDS demodulation part 183.

The reception level detection part 181 described above receives the signal IFDⱼ from the tuner unit 130. And the reception level detection part 181 detects the signal level and the noise level of this signal IFDⱼ. Here, the multi-path noise level is included in the noise level. The result of detection by the reception level detection part 181 is reported to the control unit 190 as reception level information RLVⱼ.

The RDS detection part 182 described above performs digital wave detection processing upon the signal IFDⱼ from the tuner unit 130 according to a predetermined method, and generates a signal DRDⱼ. This signal DRDⱼ that has thus been generated is outputted to the RDS demodulation part 183.

The RDS demodulation part 183 described above performs demodulation processing upon the signal DRDⱼ from the RDS detection part 182, and generates a data signal DBDⱼ. This data signal DBDⱼ includes a program identification code (i.e. a PI code), AF data, which is data about frequency information for alternative candidate stations to the broadcasting station that is tuned to and that belong to the same network as that broadcasting station, and so on. This data signal DBDⱼ that has thus been generated is outputted to the control unit 190.

Returning to Fig. 1, the actuation input unit 150 is made as a key part provided to the main body portion of the reception device 100, or as a remote input device or the like that includes a key part. Here, it is possible to employ a touch panel provided to a display unit not shown in the figures as the key part that is provided to the main body portion. Moreover, instead of including a key part, it would also be possible to employ a structure in which audio input is performed. The result of actuation input to the actuation input unit 150 is sent to the control unit 190 as actuation input data IPD.

The sound output unit 160 comprises: (i) a DA (Digital to Analog) converter that converts audio data ADT received from the reproduction processing unit 140 to an analog signal; (ii) an amplifier that amplifies this analog signal outputted from the DA converter; and (iii) a speaker that converts this amplified analog signal into audio. It should be understood that (i) to (iii) are provided for each of the stereo signals that are the result of stereo demodulation processing.

The control unit 190 described above controls the overall operation of the reception device 100. In this embodiment, this control unit 190 comprises a CPU (Central Processing Unit) and a storage device and so on, and controls the overall operation of the reception device 100 by executing a program that is prepared in advance.

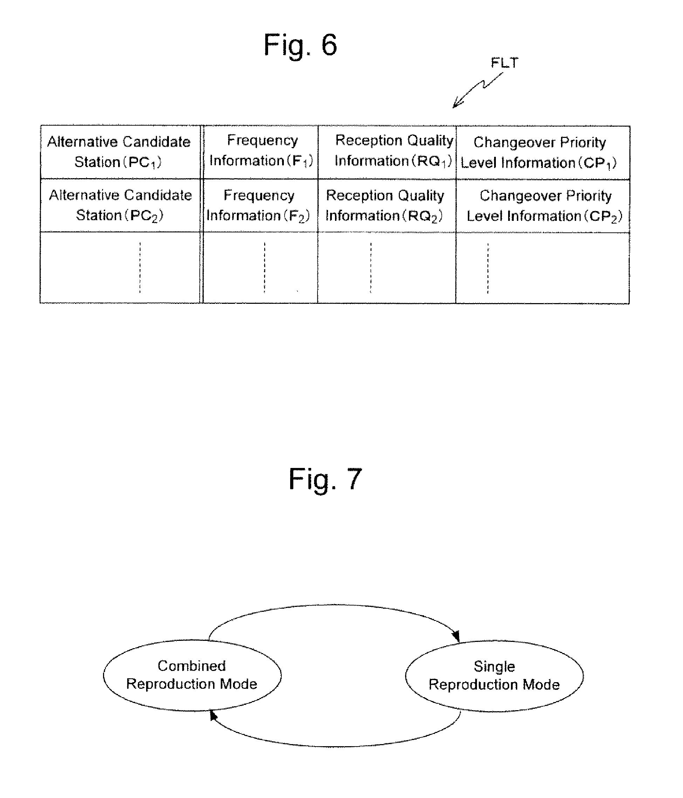

A frequency list FLT is stored in the storage device. As shown in Fig. 6, in this frequency list FLT, in correspondence with alternative candidate stations (PCₖ (k=1,2,...)) to the target station for reproduction, there are registered frequency information (Fₖ), reception quality information (RQₖ), and changeover level priority information (CPₖ) corresponding to the alternative candidate station (PCₖ).

In the control by the control unit 190, there is included control during reproduction of the program broadcast from the target station for reproduction by the reception device 100 in a combined reproduction mode or in a single reproduction mode shown in Fig. 7. Here "combined reproduction mode" is a mode in which reproduction output is performed on the basis of the result of reception of the broadcast wave from the target station for reproduction by both the main antenna 110₁ and the sub-antenna 110₂. Furthermore, "single reproduction mode" is a mode in which reproduction output is performed on the basis of the result of reception of the broadcast wave from the target station for reproduction by only the main antenna 110₁.

Moreover, control by the control unit 190 also includes transition control between the combined reproduction mode and the single reproduction mode, on the basis of the reception quality of the broadcast wave from the target station for reproduction at the main antenna 110₁. And this control by the control unit 190 also includes control for changing over the tuning from the current target station for reproduction to a new target station for reproduction.

The details of the control operation of the control unit 190 described above will be described hereinafter.

### [Operation]

Next, the operation of the reception device 100 having a structure as described above will be explained, with attention being principally directed to the control operation performed by the control unit 190.

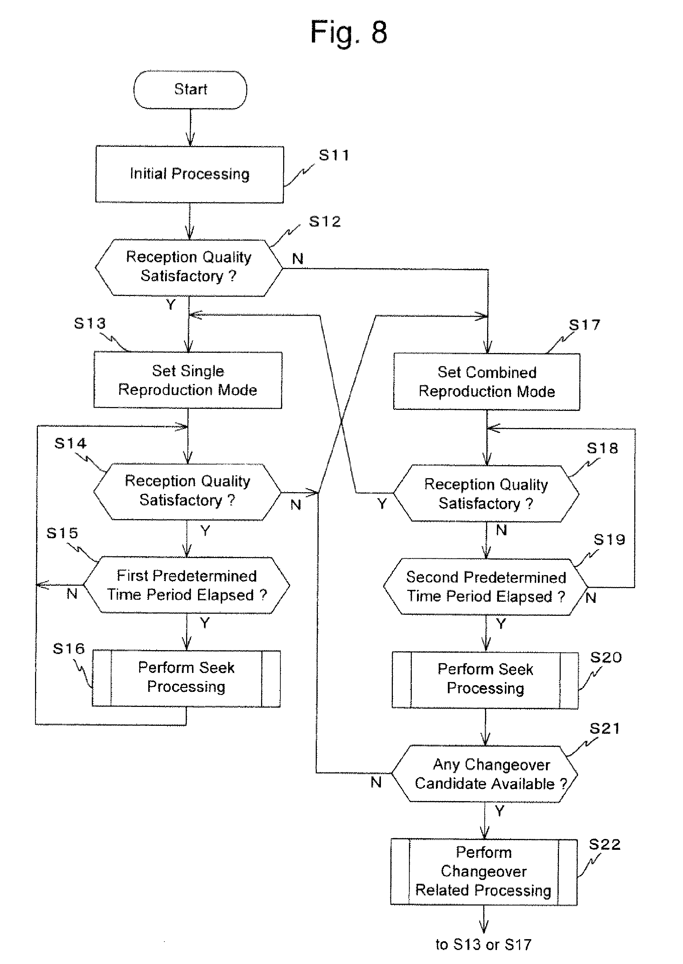

When a target station for reproduction is designated by actuation input or the like by the user on the actuation input unit 150, a reproduction control procedure for the program broadcast from the target station for reproduction is started by the control unit 190. First, as shown in Fig. 8, in this reproduction control procedure, initial processing is performed in a step S11.

First, during this initial processing, the control unit 190 issues a command for muting processing to the muting processing part 143. Next, the control unit 190 issues a command to the filtering control part 174 for cancellation of interruption of filter control. And the control unit 190 issues a command to the main tuner part 131₁ to tune to the target station for reproduction.

Next, the control unit 190 gathers the PI data and the AF data and so on included in the data signal DBD₁ from the RDS signal processing part 145₁. And, along with storing this PI code that has thus been gathered internally, the control unit 190 also creates a new frequency list FLT on the basis of this AF data. It should be understood that, at this stage, frequency information (Fₖ) corresponding to alternative candidate stations (PCₖ (k=1,2,...)) to the target station for reproduction is registered in this frequency list FLT in correlation with these alternative candidate stations (PCₖ).

Next in a step S12 a decision is made as to whether or not the reception quality of the broadcast wave from the target station for reproduction received by the main antenna 110₁ is satisfactory. When deciding whether this reception quality is satisfactory, the control unit 190 specifies the instantaneous signal level and noise level at this time point on the basis of the reception level information RLV₁ from the RDS signal processing part 145₁. And the control unit 190 makes the decision as to whether or not the reception quality is satisfactory on the basis of the signal level and the noise level that have thus been specified.

It should be understood that the algorithm for deciding whether or not the reception quality is satisfactory is determined in advance on the basis of experiment, simulation, experience and so on. Generally, in this algorithm, it is arranged to decide that the reception quality is satisfactory if the signal level is higher than some level, and moreover the noise level is sufficiently lower than the signal level.

But if the result of the decision in the step S12 is negative (N in the step S12), then the flow of control is transferred to a step S17. It should be understood that the processing of the step S17 and subsequently will be described hereinafter.

If the result of the decision in the step S12 is affirmative (Y in the step S12), then the flow of control proceeds to a step S13. In this step S13, a setting for the single reproduction mode is performed.

During this setting of the single reproduction mode, the control unit 190 issues an "OFF" command for the switch part 172, and also issues a "select A" command to the signal selection part 177. And, after a time period in which filter control by the filtering control part 174 is considered to be adequate has elapsed, the control unit 190 issues a command for eliminating muting to the muting processing part 143. As a result the operation of the single reproduction mode is started, in which reproduction output is performed on the basis of the result of reception of the broadcast wave from the target station for reproduction by only the main antenna 110₁.

During the operation of the single reproduction mode that has been started in this manner, in a step S 14, a decision is made as to whether or not the reception quality of the broadcast wave from the target station for reproduction is satisfactory. The processing in this step S14 is performed in a similar manner to the case of the step S12 described above. If the result of the decision in the step S14 is negative (N in the step S14), then the flow of control is transferred to a step S 17, after a command for muting processing has been issued to the muting processing part 143 by the control unit 190. It should be understood that, when the flow of control is transferred to the step S17, the operation of the single reproduction mode comes to an end.

But if the result of the decision in the step S14 is affirmative (Y in the step S14), then the flow of control proceeds to a step S15. In this step S15, after seek processing which will be described hereinafter has been performed, a decision is made as to whether or not a first predetermined time period has elapsed. And if the result of this decision is negative (N in the step S15), then the flow of control returns to the step S14.

It should be understood that this first predetermined time period is determined in advance from the standpoint of implementing effective and quick seek processing, on the basis of experiment, simulation, experience and so on.

But if the result of the decision in the step S15 is affirmative (Y in the step S15), then the flow of control proceeds to a step S16. In this step S16, seek processing is performed during the operation of the single reproduction mode.

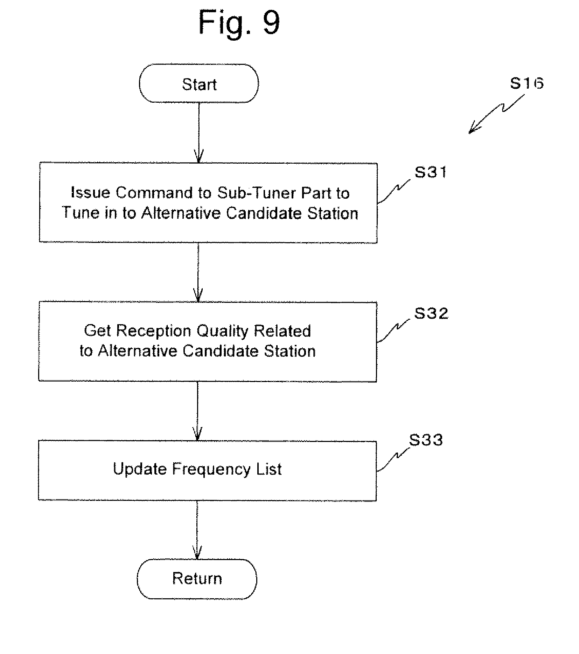

In this seek processing of the step S16, as shown in Fig. 9, first in a step S31 the control unit 190 issues a command to the sub-tuner part 131₂ to tune to an alternative candidate station for which the reception quality is to be detected in this episode of seek processing. As a result, the signal level and the noise level of the broadcast wave from that alternative candidate station received by the sub-antenna 110₂ are detected by the RDS signal processing part 145₂. And the result of detection is reported to the control unit 190 as reception level information RLV₂.

Next in a step S32 the control unit 190 gets the reception level information RLV₂ from the RDS signal processing part 145₂. And the signal level and the noise level of the broadcast wave from the alternative candidate station at this time point are specified on the basis of this reception level information RLV₂ that has been acquired.

Next in a step S33 the control unit 190 updates the frequency list FLT on the basis of the signal level and the noise level that have thus been specified. During this updating, the control unit 190 registers the signal level and the noise level specified in this seek episode as the reception quality information (RQₖ₀) corresponding to this alternative candidate station (PCₖ₀). Moreover, the control unit 190 evaluates the reception quality from the signal level and the noise level specified in this seek episode, and updates the changeover priority level information (CPₖ) correlated with each of the alternative candidate stations (PCₖ).

When the seek processing in the step S16 terminates in this manner, the flow of control returns to the step S14 of Fig. 8. Subsequently the processing of the steps S14 through S16 is performed repeatedly, until the result of the decision in the step S14 becomes negative.

When the flow of control proceeds to the step S17 from the step S12 or the step S14 described above, setting for the combined reproduction mode is performed. During this setting of the combined reproduction mode, the control unit 190 issues a command to the switch part 172 to go to "ON", and also issues a command to the signal selection part 177 to "select A". Next, the control unit 190 issues a command to the main tuner part 131₁ to tune to the target station for reproduction. And, after a time period that it is considered is adequate for filter control by the filtering control part 174 has elapsed, the control unit 190 issues a command to the muting processing part 143 to cancel muting. As a result the operation of the combined reproduction mode starts, in which reproduction output is performed on the basis of the results of reception of the broadcast wave from the target station for reproduction by both the main antenna 110₁ and the sub-antenna 110₂.

During the operation of the combined reproduction mode that has started in this manner, in a step S 18, a decision is made as to whether or not the reception quality of the broadcast wave from the target station for reproduction is satisfactory. The processing in this step S18 is performed in a manner similar to that in the step S12 described above. If the result of the decision in the step S18 is affirmative (Y in the step S18) then, after a command has been issued by the control unit 190 to the muting processing part 143 for muting processing, the flow of control proceeds to the step S13. Subsequently, the processing of the steps S13 through S16 is performed. It should be understood that, when the flow of control proceeds to the step S13, the operation of the combined reproduction mode comes to an end.

If the result of the decision in the step S 18 is negative (N in the step S18), then the flow of control proceeds to a step S19. In this step S19, after the seek processing of the step S16 described above or seek processing of a step S20 that will be described hereinafter has been executed, a decision is made as to whether or not a second predetermined time period has elapsed. If the result of this decision is negative (N in the step S19), then the flow of control returns to the step S18.

It should be understood that this second predetermined time period is determined in advance on the basis of experiment, simulation, experience and so on, from the standpoint of preventing the generation of any feeling of discomfort to the user, and moreover of implementing effective and quick seek processing.

If the result of the decision in the step S 19 is affirmative (Y in the step S 19), then the flow of control proceeds to a step S20. In this step S20, seek processing is performed during the operation of the combined reproduction mode.

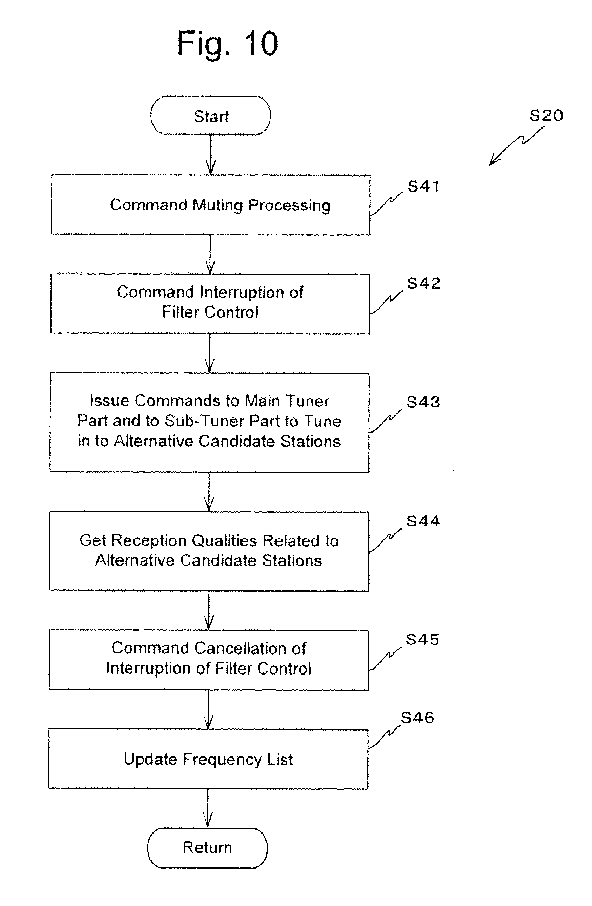

In this seek processing of the step S20, as shown in Fig. 10, first in a step S41 the control unit 190 issues a command to the muting processing part 143 to perform muting processing. Next in a step S42 the control unit 190 issues a command to the filtering control part 174 to interrupt filter control.

Next in a step S43 the control unit 190 issues commands to the main tuner part 131₁ and the sub-tuner part 131₂ to tune to two alternative candidate stations for which the reception quality is to be detected in this episode of seek processing. The control unit 190 is adapted to select these two alternative candidate stations, during these tuning commands, according to the order of changeover priority level information (CPₖ) in the frequency list FLT.

When the commands for tuning to these two alternative candidate stations are issued, the signal level and the noise level of the broadcast wave from one of the alternative candidate stations received by the main antenna 110₁ are detected by the RDS signal processing part 145₁. And the result of this detection is reported to the control unit 190 as the reception level information RLV₁.

Moreover, the signal level and the noise level of the broadcast wave from the other one of the alternative candidate stations received by the sub-antenna 110₂ are detected by the RDS signal processing part 145₂. And the result of this detection is reported to the control unit 190 as the reception level information RLV_{2.}

Next in a step S44 the control unit 190 gets the reception level information RLV₁ from the RDS signal processing part 145₁ and the reception level information RLV₂ from the RDS signal processing part 145₂. And, along with specifying the signal level and the noise level of the broadcast wave from the one alternative candidate station at this time point on the basis of the reception level information RLV₁ that has been obtained, also it specifies the signal level and the noise level of the broadcast wave from the other alternative candidate station at this time point on the basis of the reception level information RLV₂ that has been obtained.

Next in a step S45 the control unit 190 issues a command to the filtering control part 174 for cancellation of the interruption of filter control. As a result, the filtering control part 174 resumes the calculation of new filter control information FLC₁ and FLC₂₁ while taking the values of the filter control information FLC₁ and FLC₂₁ at the time point that the step S42 was executed as departure values. Due to this, the time period until filter control comes to be adequate comes to be shortened.

Next in a step S46 the control unit 190 updates the frequency list FLT on the basis of the signal levels and the noise levels that have been specified for these two alternative candidate stations. This updating of the frequency list FLT is performed in a similar manner to the case in the step S33 described above.

When in this manner the processing of the step S20 terminates, the flow of control proceeds to a step S21 of Fig. 8. In this step S21, on the basis of the instantaneous signal levels and noise levels related to the two alternative candidate stations specified in the step S20, and on the basis of the instantaneous signal level and noise level of the target station for reproduction detected directly before the processing of the step S20, the control unit 190 makes a decision as to whether or not there exists any changeover candidate station among these two alternative candidate stations, for which there is a possibility that it can be made an adequate new target station for reproduction. This decision is performed by making a decision as to whether or not the instantaneous reception quality of the broadcast wave from at least one of these two alternative candidate stations is higher than the instantaneous reception quality of the broadcast wave from the target station for reproduction.

If the result of the decision in the step S21 is negative (N in the step S21), then the flow of control returns to the step S17. And the processing of the steps S17 through S21 described above is performed until the result of the decision in the step S18 becomes affirmative, or the result of the decision in the step S21 becomes affirmative.

If the result of the decision in the step S21 is affirmative (Y in the step S21), then the flow of control proceeds to a step S22. In this step S22, processing is performed relating to the changeover from the current target station for reproduction to the new target station for reproduction.

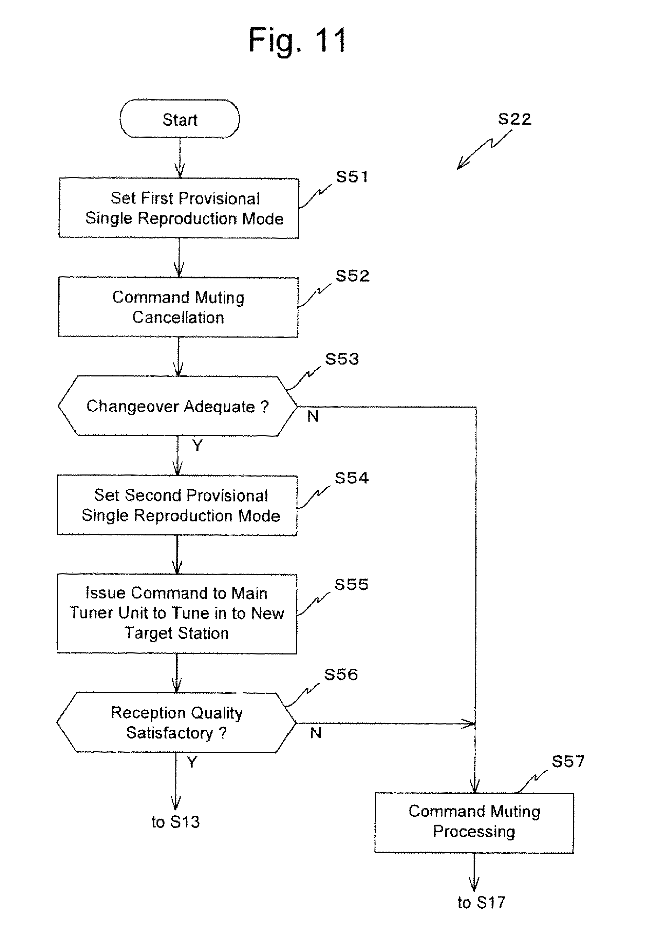

In the changeover related processing, as shown in Fig. 11, first in a step S51 setting of a first provisional single reproduction mode is performed. This first provisional single reproduction mode is a mode in which, provisionally in order to continue reproduction output, reproduction output is performed on the basis of the result of reception of the broadcast wave from the target station for reproduction by only the main antenna 110₁, irrespective of whether the reception quality of the broadcast wave from the target station for reproduction is satisfactory or not.

During this setting of the first provisional single reproduction mode, first, the control unit 190 issues an "OFF" command to the switch part 172, and also issues a "select B" command to the signal selection part 176. Next, the control unit 190 issues a command to the main tuner part 131₁ to tune to the target station for reproduction. As a result, the wave detection result based upon the result of reception of the broadcast wave from the target station for reproduction by only the main antenna 110₁ is sent to the muting processing part 143. Moreover, filter control for the filter part 171₂ is performed by the filtering control part 175.

Next in a step S52, after a time period has elapsed in which it is considered that filter control by the filtering control part 174 will become adequate, the control unit 190 issues a command to the muting processing part 143 to cancel muting. As a result, reproduction output is performed on the basis of the result of reception of the broadcast wave from the target station for reproduction by only the main antenna 110_{1.}

Next in a step S53 a decision is made as to whether or not the changeover of the target station for reproduction is adequate. During this decision, the control unit 190 first issues a command to the sub-tuner part 131₂ to tune to the changeover candidate station. Next, the control unit 190 makes a decision as to whether or not the changeover of the target station for reproduction is adequate, by making a decision as to whether or not changeover conditions are satisfied, such as whether the PI data from the target station for reproduction is the same as the PI data from the changeover candidate station, whether the average reception quality from the changeover candidate station during a predetermined time interval is higher than the average reception quality of the broadcast wave from the target station for reproduction over that predetermined time interval, and the like.

It should be understood that this predetermined time interval is determined in advance on the basis of experiment, simulation, experience and the like, from the standpoint of accuracy and speed of deciding upon the adequacy of the changeover.

It should be understood that, if there are two changeover candidate stations, and if it is decided for the first changeover candidate station that the changeover is not adequate, then a similar decision comes to be performed for the next changeover candidate station.

If the result of the decision in the step S53 is negative (N in the step S53), then the flow of control is transferred to a step S57. In this step S57, the control unit 190 issues a command to the muting processing part 143 to perform muting processing. Subsequently the flow of control is transferred to the step S17 of Fig. 8. As a result, the operation of the combined reproduction mode is resumed, in which reproduction output is performed on the basis of the results of reception of the broadcast wave from the target station for reproduction by the main antenna 110₁ and the sub-antenna 110₂.

Returning to Fig. 11, if the result of the decision in the step S53 is affirmative (Y in the step S53), then the changeover candidate station up till now is confirmed as the new target station for reproduction. And then the flow of control proceeds to a step S54.

In this step S54, the setting of a second provisional single reproduction mode is performed. This second provisional single reproduction mode is a mode in which, provisionally in order to continue reproduction output, reproduction output is performed on the basis of the result of reception of the broadcast wave from the target station for reproduction by only the sub-antenna 110₂.

During this setting of the second provisional single reproduction mode, the control unit 190 issues a "select B" command to the signal selection part 177. As a result, reproduction output is performed on the basis of the result of reception of the broadcast wave from the new target station for reproduction by only the sub-antenna 110₂.

Next in a step S55 the control unit 190 issues a command to the main tuner part 131₁ to tune in to the new target station for reproduction. As a result, the result of filtering processing upon the result of reception of the broadcast wave from the new target station for reproduction by only the main antenna 110₁ is sent to the A terminal of the signal selection part 177. Moreover, the signal level and the noise level of the broadcast wave from the new target station for reproduction received by the main antenna 110₁ are detected by the RDS signal processing part 145₁. And the result of this detection is reported to the control unit 190 as the reception level information RLV₁.

Next in a step S56 a decision is made as to whether or not the reception quality of the broadcast wave from the new target station for reproduction is satisfactory. This decision is made in a similar manner to the case in the step S12 described above.

If the result of the decision in the step S56 is negative (N in the step S56), then the flow of control proceeds to the step S57. And in this step S57, after a command for muting processing has been issued by the control unit 190 to the muting processing part 143, the flow of control is transferred to the step S17 of Fig. 8. As a result the operation of the combined reproduction mode is resumed, in which reproduction output is performed on the basis of the results of reception of the broadcast wave from the target station for reproduction by the main antenna 110₁ and the sub-antenna 110₂.

Returning to Fig. 11, if the result of the decision in the step S56 is affirmative (Y in the step S56), then the flow of control is transferred to the step S13 of Fig. 8. As a result the operation of the single reproduction mode is started, in which reproduction output is performed on the basis of the result of reception of the broadcast wave from the target station for reproduction by only the main antenna 110_{1.}

As has been explained above, in this embodiment, if the phase diversity combination operation condition that the reception quality of the broadcast wave from the target station for reproduction is lower than a predetermined reception quality is satisfied, then operation is performed in the combined reproduction mode, in which reproduction output is performed on the basis of the results of reception of the broadcast wave from the target station for reproduction by both the main antenna 110₁ and the sub-antenna 110₂. And periodically, during this combined reproduction mode, a command for muting processing is issued for a predetermined time period, this being a command for preventing noise reproduction. During the period of this muting processing command, as tuning commands to the main tuner part 131₁ and the sub-tuner part 131₂, the control unit 190 issues commands for tuning to mutually different broadcasting stations among the alterative candidate stations, according to the frequency list FLT. As a result, detection of reception quality is performed in parallel for the broadcast wave from each of these two alternative candidate stations.

Thus, according to this embodiment, it is possible to make reproduction operation of the program broadcast from the target station for reproduction and seek operation for an appropriate alternative candidate station mutually compatible with one another, while preventing the occurrence of any feeling of discomfort to the user.

Moreover, with this embodiment, when starting a seek operation for an alternative candidate station during the operation of the combined reproduction mode, a command for interruption of filter control is issued to the filtering control part 174, and the filter control information at the time point of this interruption is stored. Due to this, when resuming the previous operation of the combined reproduction mode for the target station for reproduction, it is possible rapidly to shorten the time period until filter control by the filtering control part 174 is performed adequately, without performing changeover of the target station for reproduction after the seek operation.

Furthermore since, with this embodiment, if a changeover candidate station exists, provisionally reproduction output is performed on the basis of the result of reception of the broadcast wave from the target station for reproduction by only the main antenna 110₁, accordingly it is possible to prevent long term interruption of the reproduction output.

And, with this embodiment, when making a changeover of the target station for reproduction from the previous target station for reproduction to which the main tuner part 131₁ is tuned, to the changeover candidate station to which the sub-tuner part 131₂ is tuned, then first, provisionally, reproduction output is performed on the basis of the result of reception of the broadcast wave from the new target station for reproduction by only the sub-antenna 110₂. Next, after a command has been issued to the main tuner part 131₁ for it to tune to the new target station for reproduction, setting of the combined reproduction mode or of the single reproduction mode is performed on the basis of the reception quality of the broadcast wave from the new target station for reproduction. Due to this, it is possible to prevent long term interruption of the reproduction output when changing over to the new target station for reproduction.

### [MODIFICATION OF THE EMBODIMENT]

The present invention is not to be considered as being limited to the embodiment described above; alterations of various types are possible.

For example while, in the embodiment described above, muting processing was employed as noise reproduction prevention processing, it would also be acceptable to arrange to employ hold processing, in which the reproduction output signal level is held at the time point that noise reproduction prevention processing is started.

Moreover while, in the embodiment described above, it is arranged to perform adaptive control by using a CMA, it would also be acceptable to arrange to perform adaptive control by using some other algorithm, according to the control objective and the characteristics of the control object.

Furthermore while, in the embodiment described above, a FIR filter was employed as the filter part, it would also be possible to employ an infinite impulse response filter (i.e. an IIR filter).

Yet further while, in the embodiment described above, the frequency list FLT was constructed using the RDS method, if it is possible to use another method that can specify groups of physical channels upon which the same broadcast contents are broadcast, it would also be acceptable to construct the frequency list FLT by using that other method.

Even further while, in the embodiment described above, it is arranged to perform changeover of the target station reproduction only during the combined reproduction mode, it would also be acceptable to arrange, during operation in the single reproduction mode, to perform searching for an alternative candidate station whose reception quality is higher than that of the current target station for reproduction, and to perform changeover of the target station for reproduction to that alternative candidate station if some appropriate candidate station has been found.

Moreover while, in the embodiment described above, it is arranged to include the multi-path noise level as a noise level, it would also be acceptable to arrange further to include so called adjacent station interference noise, which is generated by mixing of broadcast waves from stations that are on adjacent frequencies.

Furthermore while, in the embodiment described above, a two-tuner structure was employed, it would also be possible to employ three or more antenna-tuner pairs.

And while, in the embodiment described above, the present invention was applied to an FM radio reception device that was mounted to a vehicle, it would also be possible to apply the present invention to a device having another type of reception capability; and it would also be possible to apply the present invention to a reception device that is mounted to a moving body other than a vehicle. Furthermore it would also be possible to apply the present invention to a device having a broadcast reception function and that is installed in, for example, a household or the like.

It should be understood that while, in the embodiment described above, it is arranged for the control unit 190 to execute the control procedures of the embodiment described above by being built as a computer that includes a CPU and by a program that is prepared in advance being executed by that computer, it would also be acceptable to arrange to constitute all or a part of the control unit 190 as hardware such as a dedicated LSI.

Furthermore, it would also be acceptable to arrange for the program that is executed by the control unit 190 to be acquired in a format in which it is recorded upon a transportable recording medium such as a CD-ROM or a DVD or the like; and it would also be acceptable to arrange for it to be acquired in a format in which it is distributed via a network such as the internet or the like.

## Claims

1. A reception device that receives and reproduces a broadcast signal from a target station for reproduction, **characterized by** comprising:
a first antenna means and a second antenna means;
a first frequency conversion means that converts a signal on a first broadcast wave frequency band from a first selected station received by said first antenna means, to a first signal on a predetermined frequency band;
a second frequency conversion means that converts a signal on a second broadcast wave frequency band from a second selected station received by said second antenna means, to a second signal on said predetermined frequency band;
a first detection means that detects the reception quality of said first broadcast wave;
a second detection means that detects the reception quality of said second broadcast wave;
a generation means that generates a signal for reproduction on the basis of at least one of said first signal and said second signal, according to a signal selection command;
a processing means that, when a noise reproduction prevention command has been issued, performs noise reproduction prevention processing upon said signal for reproduction that has been generated; and
a control means that stores frequency list information in which is registered frequency information for at least a signal alternative candidate station corresponding to said target station for reproduction, and that issues: commands to said first and second frequency conversion means for selection of said first and said second selected stations, said signal selection command to said generation means, and said noise reproduction prevention command to said processing means;
and wherein said control means:
if a phase diversity combining operation condition is satisfied that, when said target station for reproduction is designated as said first selected station, the result of detection by said first detection means is lower than a predetermined reception quality: designates said second selected station as said target station for reproduction, and issues commands for said first signal and said second signal to be selected as said signal selection commands;
if said phase diversity combining operation condition is satisfied, and moreover there are a plurality of said alternative candidate stations: periodically over a predetermined time period, issues said noise reproduction prevention command, and, as designation of said first and said second selected stations, according to said frequency list information, designates mutually different broadcasting stations among said alternative candidate stations, and gathers the results of detection by said first and said second detection means; and
on the basis of the results of detection by said first and said second detection means within said predetermined time period, and the result of detection of the reception quality of the broadcast wave from said target station for reproduction by said first detection means outside said predetermined time period: makes a changeover possibility decision as to whether or not there exists an alternative candidate station for which there is an adequate possibility that it can be made a new target station for reproduction.

2. A reception device according to Claim 1, wherein said generation means comprises:
a first filter means that performs processing upon said first signal according to a first filtering command;
a second filter means that performs processing upon said second signal according to a second filtering command;
an addition means that, if a command is issued to select said first signal and said second signal as said signal selection command, performs addition of the output signal of said first filter means and the output signal of said second filter means; and
a filtering control means that issues commands for said first filtering and said second filtering on the basis of the result of addition by said addition means;
and wherein said control means issues a command to hold said first and second filtering commands before designating mutually different broadcasting stations among said alternative candidate stations as designation of said first selected station and said second selected station, and subsequently performs cancellation of said hold command, after having issued designation of said target station for reproduction as designation of said first selected station and said second selected station.

3. A reception device according to Claim 2, wherein said generation means further comprises a wave detection means that generates said signal for reproduction by performing wave detection processing upon the result of addition by said addition means.

4. A reception device according to any one of Claims 1 through 3, wherein:
frequency information for each said alternative candidate station is included in the broadcast signal from said target station for reproduction; and
said control means constructs said frequency list information on the basis of said frequency information for each said alternative candidate station included in the broadcast signal from said target station for reproduction.

5. A reception device according to any one of Claims 1 through 4, wherein said noise reproduction prevention processing is either muting processing or hold processing.

6. A reception device according to any one of Claims 1 through 5, wherein, if the result of said changeover possibility decision is negative, said control means performs designation of said target station for reproduction as the designation of said first and second selected stations, and cancels said noise reproduction prevention command.

7. A reception device according to any one of Claims 1 through 6, wherein, if the result of said changeover possibility decision is affirmative, said control means:
designates said target station for reproduction as the designation of said first selected station, designates an alternative candidate station for which there is a changeover possibility as the designation of said second selected station, issues a command for said first signal to be selected as said signal selection command, and cancels said noise reproduction prevention command;
and thereafter makes a decision as to the adequacy of changeover, which is a decision as to whether or not it would be adequate to set said alternative candidate station for which there is a changeover possibility as said new target station for reproduction, in consideration of the results of detection by said first and said second detection means.

8. A reception device according to Claim 7, wherein, if the result of said decision as to the adequacy of changeover is affirmative, said control means:
issues a command for said second signal to be selected, as said signal selection command;
thereafter, designates said new target station for reproduction as the designation of said first selected station; and issues said signal selection command according to the result of detection by said first detection means.

9. A reception device according to any one of Claims 1 through 8, wherein, if the result of detection by said first detection means when said target station for reproduction is designated as said first selected station is that the reception quality is greater than or equal to a predetermined reception quality, said control means:
periodically, over said predetermined time period, designates a single broadcasting station among said alternative candidate stations as the designation of said second selected station, and obtains the result of detection by said second detection means; and
performs updating processing of said frequency list information on the basis of the result of detection by said second detection means.

10. A reception device according to any one of Claims 1 through 9, wherein, in said frequency list information, a changeover priority level is registered in correlation with each said alternative candidate station; and
wherein said control means designates said alternative candidate stations within said predetermined time period according to said changeover priority levels, and
performs updating processing of said frequency list information on the basis of the results of detection of the reception quality of the broadcast wave from said alternative candidate stations within said predetermined time period.

11. A reception device according to any one of Claims 1 through 10, that is a radio data system reception device.

12. A reception processing method that is used by a reception device that comprises a first frequency conversion means that converts a signal on a first broadcast wave frequency band from a first selected station received by a first antenna means to a first signal on a predetermined frequency band; a second frequency conversion means that converts a signal on a second broadcast wave frequency band from a second selected station received by a second antenna means to a second signal on said predetermined frequency band; a first detection means that detects the reception quality of said first broadcast wave; and a second detection means that detects the reception quality of said second broadcast wave, and wherein frequency list information in which is registered frequency information for at least a signal alternative candidate station corresponding to a target station for reproduction is stored internally, comprising:
a combining process of, if a phase diversity combining operation condition is satisfied that, when said target station for reproduction is designated as said first selected station, the result of detection by said first detection means is lower than a predetermined reception quality: designating said second selected station as said target station for reproduction, and performing phase diversity combination on the basis of said first signal and said second signal;
a gathering process of, if said phase diversity combining operation condition is satisfied, and moreover there are a plurality of said alternative candidate stations: during the execution of said combining process, while periodically over a predetermined time period issuing said noise reproduction prevention command, as designation of said first and said second selected stations, according to said frequency list information, designating mutually different broadcasting stations among said alternative candidate stations, and gathering the results of detection by said first and said second detection means; and
a decision process of, on the basis of the results of detection by said first and said second detection means within said predetermined time period, and the result of detection of the reception quality of the broadcast wave from said target station for reproduction by said first detection means outside said predetermined time period: making a decision as to whether or not there exists an alternative candidate station for which there is an adequate possibility that it can be made a new target station for reproduction.

13. A reception processing program, **characterized in that** a reception processing method according to Claim 12 is executed by a calculation means.

14. A recording medium, **characterized in that** a reception processing program according to Claim 13 that can be read in by a calculation means is recorded thereupon.
